# NOUVEAU FASCICULE DE BREVET EUROPEEN

(11) **EP 0 147 344 B2**
(45) Date de publication et mention de la décision concernant l'opposition: **06.12.1995**
(45) Mention de la délivrance du brevet: 04.04.1990
(21) Numéro de dépôt: 84430038.4
(22) Date de dépôt: 12.11.1984
(51) Int. Cl.: A01G 3/04

(54) **Machine de coupe utilisable en agriculture, viticulture et arboriculture**
Schneidapparat zur Verwendung in der Landwirtschaft, dem Weinbau und der Baumgärtnerei
Cutting device for use in agriculture, viticulture and arboriculture

(30) Priorité: 14.11.1983 FR 8318167
(43) Date de publication de la demande: 03.07.1985
(60) Demande divisionnaire: 88119957.4
(73) Titulaire: ETABLISSEMENTS PELLENC ET MOTTE, 84120 Pertuis (FR)
(72) Inventeur: Pellenc, Roger, F-84120 Pertuis (FR); Roman, Georges, F-84120 Pertuis (FR)
(74) Mandataire: Marek, Pierre, Cabinet Marek

(56) Documents cités:
- CH-A- 97 003
- DE-A- 2 815 466
- FR-A- 1 060 378
- FR-A- 1 290 944
- FR-A- 1 514 889
- FR-A- 1 591 146
- FR-A- 2 293 870
- FR-A- 2 494 081
- FR-A- 2 494 082
- SU-A- 793 477
- SU-A- 843 852
- SU-A- 908 281
- SU-A- 913 995
- SU-A- 938 133
- Prospectus Brunel
- Photos machine Brunel
- Photos machine Hauser

## Description

La présente invention concerne une machine de coupe utilisable en agriculture, viticulture et arboriculture, du genre comportant au moins un outil de coupe comprenant un carter circulaire rotatif muni d'ouvertures périphériques et dans lequel est logé un organe participant à l'action de coupe.

Selon un exemple d'application très avantageux, quoique nullement limitatif, l'invention permet de réaliser une machine polyvalente pour le prétaillage ou la taille automatique ou semi-automatique de la vigne et des arbres ou arbustes fruitiers. De manière plus particulièrement intéressante, dans cette application, l'invention autorise l'exécution d'une machine de prétaillage mécanique ou de taille semi-automatique des vignes, arbustes ou arbres palissés comportant des rameaux ou branches s'accrochant sur des fils soutenus par des piquets espacés; le nombre de ces fils, leur distension, leur disposition, leur diamètre, leur espacement, etc., pouvant varier d'un vignoble à un autre, voire d'un rang de vigne à un autre.

On connaît (FR-A-1,514,889) une machine de rognage utilisable dans les plantations palissées et comportant deux outils de coupe indépendants comprenant, chacun, un couteau rotatif formé de deux lames articulées et logé dans un carter monté à rotation libre et muni de dents et d'entailles périphériques, ce couteau rotatif étant placé à distance des parois supérieure et inférieure circulaires du carter; chaque outil de coupe ainsi agencé étant monté à l'extrémité d'un bras pivotant rappelé élastiquement et permettant l'effacement dudit outil de coupe au contact des piquets du palissage et son retour en position initiale après contournement de ces derniers.

Les insuffisances d'une telle machine sont nombreuses et importantes.

Le montage du carter de protection à rotation libre engendre au moins deux graves inconvénients:
sa tendance à l'immobilité, lorsqu'il ne rencontre pas d'obstacle, ne permet pas un guidage précis du fil de palissage et favorise la pénétration de celui-ci entre ses dents périphériques, de sorte que ledit fil peut être sectionné par les lames rotatives logées à l'intérieur dudit carter;
un certain nombre de rameaux ou sarments glissent sur les côtés droit et gauche de l'outil de coupe qui a une tendance à s'immobiliser lors de sa rencontre avec lesdits rameaux ou sarments dont un certain nombre n'est donc pas coupé.

On connaît également (FR-A-2,494,O81) une prétailleuse automatique destinée au prétaillage de plantations en ligne fixées sur des fils de palissage soutenus par des piquets et comprenant un ensemble de coupe monté à l'extrémité d'un bras pivotant rappelé par ressort, ledit ensemble de coupe comportant des lames et des contre-lames rotatives au-dessus desquelles est disposé un peigne tournant sous l'action d'un moteur et dont les dents radiales sont recourbées vers le bas, de manière à entourer, périphériquement, le système de coupe proprement dit, de façon à rouler sur les piquets du palissage, sans les couper, lors de la rencontre de ces derniers. Cette machine a pour principal inconvénient de ne réaliser aucun guidage du fil du palissage en cours de travail, ledit fil pouvant se prendre facilement entre les dents du peigne tournant et être sectionné par le système de coupe proprement dit. En outre, il nécessite l'utilisation de deux moteurs indépendants pour l'entraînement du système de coupe et du peigne tournant, respectivement, ce qui exclut radicalement toute possibilité d'empiler plusieurs outils de coupe autour d'un axe commun.

Un but de la présente invention est donc de remédier aux importants inconvénients soulignés ci-dessus. Selon l'invention, cet objectif est atteint grâce à une machine de coupe comportant au moins un outil de coupe comprenant une cage circulaire apte à tourner autour d'un axe de rotation et ayant, vue dans la direction de cet axe, la forme générale d'un disque échancré avec ses échancrures ou ouvertures périphériques s'étendent vers l'intérieur de celle-ci et séparées par des dents, lesdites dents comportant sur leurs deux faces des nervures de guidage comprenant une partie extrême s'étendant approximativement selon la direction de l'axe de rotation de la cage et des parties radiales s'étendant de cette partie extrême vers l'axe de rotation de manière à former ladite cage circulaire, et un organe intérieur en forme delame(s) participent à l'action de coupe logé dans ladite cage tournante et s'étendant radialement en direction de la périphérie de cette dernière, lesdites dents et ledit organe intérieur coopérent pour couper les rameaux ou les sarments s'introduisant dans lesdites ouvertures, ladite cage tournante étant accouplée à des moyens moteurs assurant son entraînement continu en rotation, la cage circulaire rotative et l'organe intérieur participant à l'action de coupe étant agencés de manière complémentaire et associés pour constituer un système de lame et de contre-lame produisant une coupe par cisaillement.

Grâce à cette construction, la cage motrice de l'outil de coupe peut "saisir" les rameaux ou sarments et les diriger au contact de l'organe intérieur permettant leur sectionnement.

Tous les rameaux ou sarments sont donc coupés et, du fait de la rotation continue de la cage rotative, le fil du palissage se trouve constamment et parfaitement guidé par les parties radiales et extrêmes des dents de ladite cage et n'a pas la possibilité de pénétrer entre ces dernières.

Un autre inconvénient important des machines de taille ou de prétaillage décrites dans les documents FR-A-1,514,889 et FR-A-2,494,O81 réside dans le fait qu'elles ne permettent pas de réduire, de manière très sensible, le temps nécessaire pour l'exécution des différentes interventions très onéreuses liées à la taille des plantations palissées et, notamment, à la taille des vignes palissées,

En effet, le prétaillage effectué à l'aide de ces machines, consiste à couper, uniquement à leur base, les sarments ou les rameaux à supprimer, de sorte que l'on doit ensuite tirer manuellement les sarments ou les rameaux sectionnés pour les détacher des fils du palissage auxquels ils sont accrochés. Ce tirage manuel des bois coupés est une opération longue, pénible et, par conséquent, très coûteuse, en raison du fait que les sarments coupés demeurent fortement agrippés au palissage par leurs vrilles, de sorte que, dans ce cas, l'enlèvement des bois de taille peut représenter entre 35 % et 65 % du temps total des opérations de taille. On conçoit également que le tirage manuel des bois de taille ne permet pas une récupération mécanique directe de ces bois, lors de la coupe, ce qui rend nécessaire un troisième passage dans les plantations, après le prétaillage et le tirage des sarments ou des bois coupés, afin d'effectuer un broyage au sol de ces derniers à l'aide d'un broyeur.

Afin de remédier à cet inconvénient, la machine selon l'invention comporte au moins un ensemble de coupe et, de préférence, deux ensembles de coupe constitués, chacun, d'une pluralité d'outils de coupe réalisés de la manière précédemment décrite, ces outils de coupe étant superposés ou empilés autour d'un axe commun. La machine ainsi réalisée permet d'éliminer totalement l'opération longue, pénible et extrêmement onéreuse que représente le tirage des bois de taille,. ce qui réduit considérablement le temps actuellement nécessaire pour l'exécution des différentes interventions liées à la taille, cette réduction étant, par exemple, largement supérieure à 50 % en ce qui concerne la taille de la vigne. En effet, la machine selon l'invention effectue un sectionnement des bois de taille en petits morceaux de quelques centimètres dont une quantité négligeable seulement reste prise dans le palissage.

D'autre part, cette machine permet également de supprimer l'opération de broyage au sol des bois de taille, les petits morceaux de bois sectionnés par ses ensembles de coupe pouvant, en effet, être aisément récupérés en même temps que l'on procède à l'opération de prétaillage et/ou de taille, au moyen d'un dispositif de récupération comprenant, par exemple, deux tapis transporteurs placés de part et d'autre du rang de vigne ou autre culture alignée, sous les ensembles de coupe, et se déversant dans une benne attelée à l'arrière du tracteur portant la machine, ce qui offre, en outre, l'avantage que les morceaux de bois récupérés ne sont pas souillés par la terre ou mélangés à des pierres.

On conçoit donc que la coupe et le broyage peuvent être effectués automatiquement en un seul passage sur les rangs.

De plus, compte tenu du fait que les bois coupés ne sont pas tirés, le palissage ne supporte aucun effort notable concourant à l'endommager, tandis que la conformation et la disposition des outils de coupe écartent tout risque d'accrochage et d'arrachage des piquets.

Un autre avantage offert par cet agencement, découle du fait que la tête de coupe de la machine constituée d'outils de coupe empilés les uns sur les autres, autour d'un axe porteur, et qu'il est ainsi aisément possible d'ajouter ou de supprimer un ou plusieurs outils, afin d'adapter la hauteur des tambours de coupe en fonction de la hauteur du palissage ou de celle des sarments ou des rameaux à éliminer.

La machine décrite dans le document FR-A-1,514,889 a encore pour inconvénient le fait que la coupe est effectuée par des lames rotatives agissant par choc et dont la vitesse de rotation doit donc être très élevée, ce qui engendre des risques de projections dangereuses susceptibles d'atteindre et de blesser son conducteur, nuit à la qualité de la coupe qui peut présenter l'aspect d'un déchiquetage et qui nécessite une reprise manuelle ultérieure, et présente aussi des risques de coincement des bois et de bourrage à l'intérieur du carter.

La machine décrite dans le document FR-A-2,494,O81 effectue une coupe nette des bois par un système de lames et de contre-lames, mais, comme indiqué précédemment, elle nécessite le montage de deux moteurs indépendants pour réaliser l'entraînement de ce système de coupe et du peigne protecteur.

Un autre but de l'invention est donc de remédier également à ces inconvénients des machines décrites dans les documents susmentionnés.

Pour celà, la cage rotative et l'organe intérieur participant à l'action de coupe de la machine selon l'invention, sont agencés de manière complémentaire et associés pour constituer un système de lame et de contre-lame produisant une coupe par cisaillement. De préférence, la cage motrice rotative est agencée pour constituer une contre-lame, tandis que l'organe intérieur comprend au moins une lame tranchante.

Grâce à cette construction, l'entraînement en rotation de la cage rotative de l'outil de coupe ou de chaque outil de coupe d'un empilage d'un nombre quelconque d'outils de coupe peut être assuré au moyen d'un unique moteur, tout en procurant une coupe très nette des bois, comparable à celle qui est obtenue avec les sécateurs, de sorte que la machine selon l'invention peut être utilisée, dans de nombreux cas, pour effectuer un pourcentage important de coupes correspondant à la taille proprement dite, c'est-à-dire des coupes ne nécessitant aucune reprise par l'opérateur chargé de la taille manuelle exécutée à la suite du prétaillage, ce qui permet de réduire encore notablement le temps nécessaire pour l'exécution de l'opération de taille manuelle.

Un autre avantage de cette construction réside dans le fait qu'elle ne présente absolument aucun danger de projections, en raison de la faible vitesse de rotation de ses outils de coupe qui peuvent tourner à une vitesse circonférentielle égale ou voisine de la vitesse linéaire d'avancement de ladite machine (environ 50 tours/minute en vitesse de rotation). De la sorte, le conducteur de la machine n'est pas séparé par un organe protecteur qui nuit à la visibilité et à la qualité du travail.

Un autre avantage important de la machine de coupe comportant les caractéristiques ci-dessus, est qu'elle ne nécessite aucun réglage de la position des ensembles de coupe constituant sa tête de coupe, en cours de travail. En effet, lors de son avancement sur le rang de vigne ou autre culture palissée, les ensembles de coupe absorbent automatiquement les variations d'état des palissages telles que les différences pouvant exister en ce qui concerne la forme et la nature des piquets, le nombre des fils, leur distension, leur disposition, leur diamètre, leur espacement, etc., les fils étant constamment guidés entre les outils desdits ensembles de coupe qui, par ailleurs, s'effacent automatiquement au contact des piquets, en les contournant au plus près afin de couper également les bois attachés à ces derniers. D'autre part, quelle que soit leur disposition, les fils de palissage ne peuvent être coupés, même lorsqu'ils sont croisés ou emmêlés, ou, lorsqu'ils sont extrêmement distendus comme c'est toujours le cas pour les fils releveurs en ce qui concerne les palissages dotés de tels fils permettant un redressement de la végétation lorsqu'elle est suffisamment avancée. Cette disposition particulière de la machine fait l'objet de la demande divisionnaixe EP-A-.

Les buts, caractéristiques et avantages susmentionnés, et d'autres encore, ressortiront mieux de la description qui suit et des dessins annexés dans lesquels:
La figure 1 est une vue de côté d'un exemple d'exécution de la machine selon l'invention représentée montée sur un tracteur agricole.
La figure 2 est une vue en plan de la figure l.

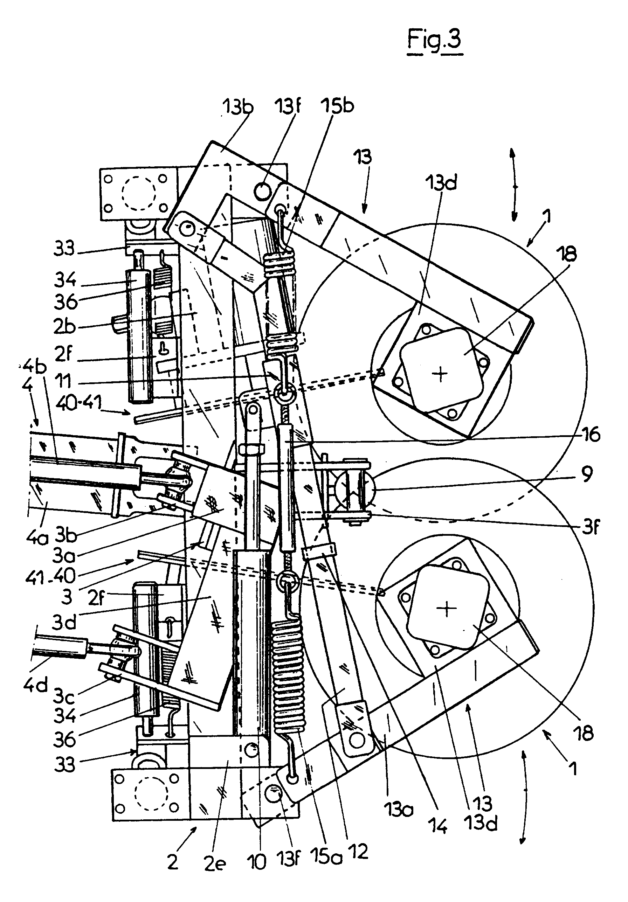

La figure 3 est une vue en plan de la partie avant de la machine.
La figure 4 est une vue de côté de la figure 3.

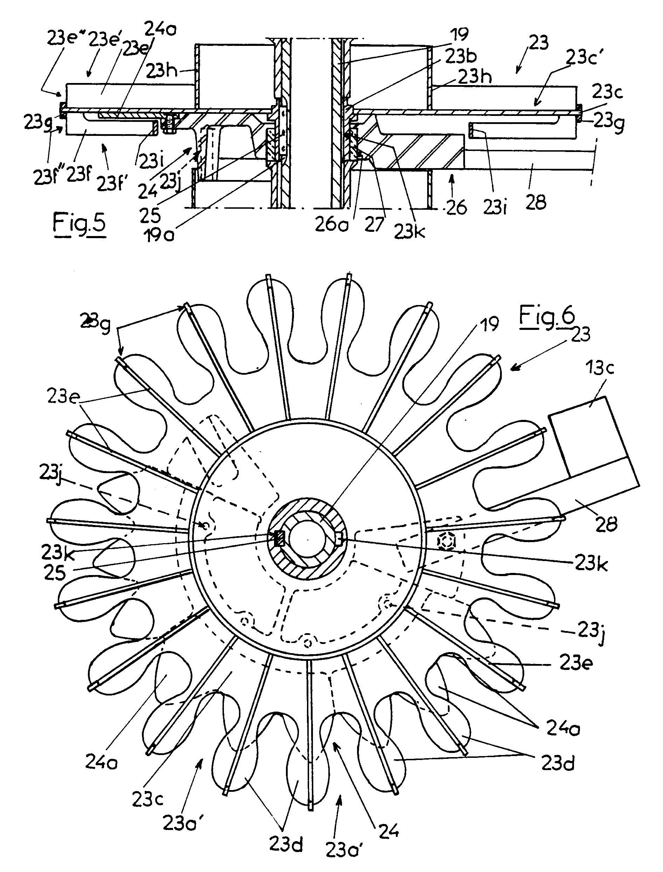

La figure 5 est une vue en coupe axiale d'un outil de coupe selon l'invention représenté monté sur son arbre d'entraînement.

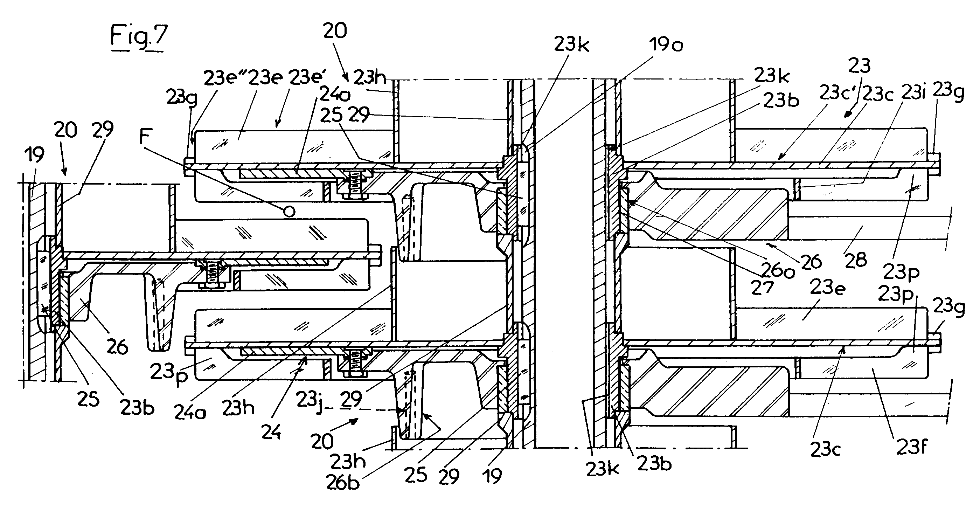

La figure 6 est une vue en plan de la figure 5.
La figure 7 est une vue partielle en coupe axiale illustrant l'interpénétration des bords des outils de coupe des deux tambours de coupe représentés en position rapprochée de travail.

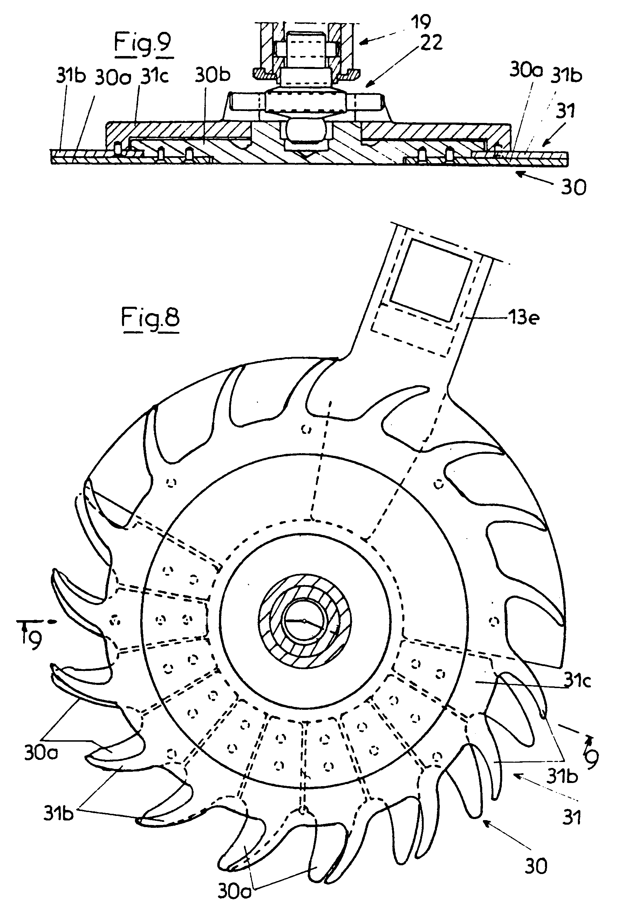

La figure 8 est une vue en plan de l'outil de coupe inférieur dont sont équipés les tambours de coupe.
La figure 9 est une vue en coupe selon la ligne 9-9 de la figure 8.
La figure 10 est une vue en coupe axiale d'une variante d'exécution de l'outil de coupe selon l'invention.
La figure 11 est une vue en plan de la figure 10.
La figure 12 est une vue partielle et en coupe axiale de deux tambours de coupe, illustrant l'interpénétration des bords des outils de ces tambours.

On se référe auxdits dessins pour décrire un exemple de réalisation intéressant, bien que nullement limitatif, de la machine de coupe selon l'invention qui, suivant cet exemple, est une machine portée apte à être accouplée au dispositif d'attelage à trois points d'un tracteur agricole classique T, et convenant plus particulièrement au prétaillage et à la taille de la vigne ou d'arbres ou arbustes palissés.

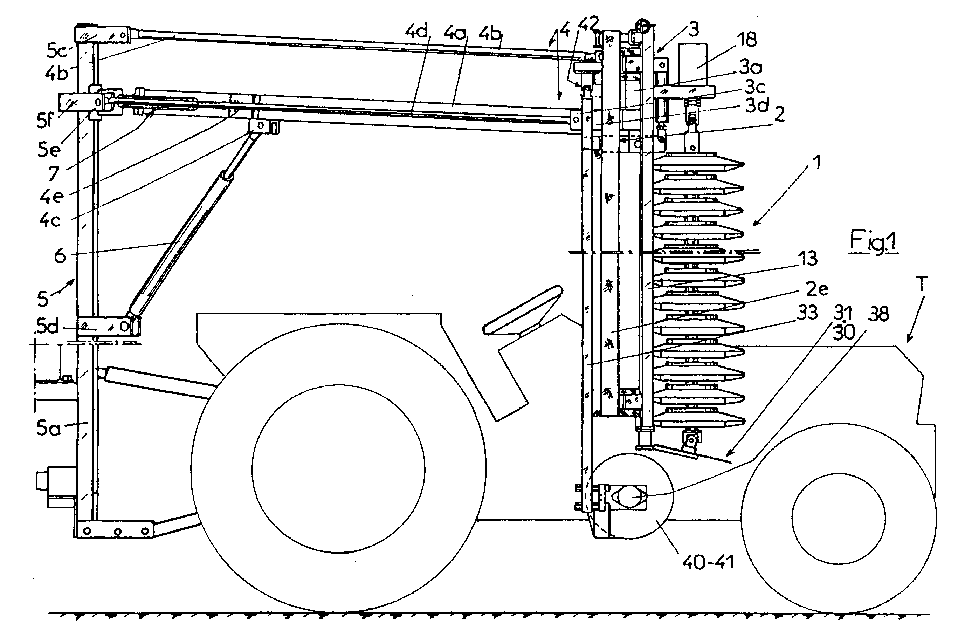

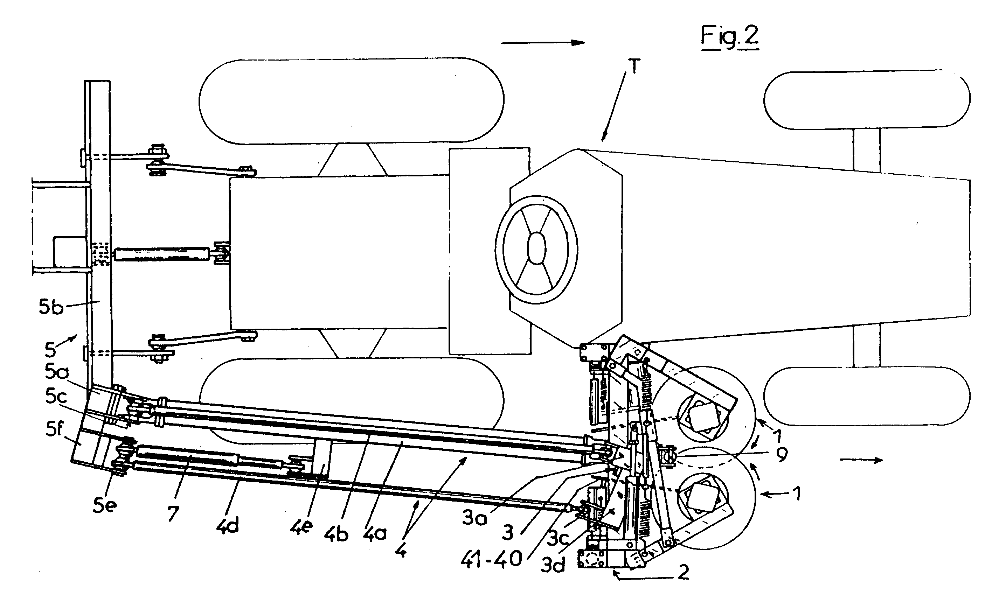

Selon une construction intéressante, la machine de coupe selon l'invention comporte au moins un ensemble de coupe et, de manière préférée, deux ensembles de coupe globalement désignés par la référence 1 aux figures 1 et 2, cet ensemble de coupe ou chaque ensemble de coupe étant essentiellement composés d'une pluralité d'outils de coupe superposés décrits en détail dans la suite du présent exposé. Suivant l'exemple illustré, ces ensembles de coupe sont constitués par des tambours rotatifs portés par un bâti porteur 2 suspendu à un support 3 monté à l'une des extrémités d'un bras 4 soutenu par un robuste châssis d'attelage 5.

Le châssis 5 est agencé de manière à pouvoir être monté, au moyen d'un dispositif d'attelage universel à trois points, sur un tracteur agricole. Ce châssis est, par exemple, principalement constitué de deux solides montants tubulaires 5a rigidement entretoisés au moyen de traverses 5b.

Il porte le bras 4 monté avec une aptitude de pivotement dans le plan vertical et dans un plan perpendiculaire au plan vertical et, par exemple, fixé à la partie supérieure de l'un des montants 5a dudit châssis.

Le bras 4 est avantageusement formé par un système de double parallélogramme déformable.

Il comprend un premier parallélogramme déformable disposé dans le plan vertical et constitué: - d'une part, d'une robuste poutre tubulaire principale 4a fixée, par ses extrémités opposées et au moyen d'articulations à joint de cardan, au montant 5a du châssis 5 et à un élément vertical 3a du support 3, respectivement, et, - d'autre part, d'une tringle 4b articulée, par ses extrémités opposées et au moyen d'articulations sphériques, dans une chape 5c portée par la partie supérieure dudit montant et dans une chape 3b dont est équipé ledit élément vertical 3a dudit support.

Les mouvements de pivotement du bras porteur 4 dans le plan vertical sont assurés au moyen d'un vérin 6 articulé, par ses extrémités opposées et au moyen d'articulations sphériques, d'une part, dans une chape 5d solidaire de la portion intermédiaire du montant 5a et, d'autre part, dans une chape 4c équipant la portion intermédiaire de la poutre principale 4a.

Le second parallélogramme déformable est disposé dans un plan perpendiculaire au plan vertical et il est constitué de ladite poutre principale 4a et d'une seconde tringle 4d articulée, par ses extrémités opposées et au moyen d'articulations sphériques, d'une part, dans une chape 5e solidaire d'une petite potence horizontale 5f fixée au voisinage de l'extrémité supérieure du montant 5a et, d'autre part, dans une seconde chape 3c dont est pourvu un élément horizontal 3d du support 3.

Les mouvements de pivotement du bras porteur 4 dans des plans perpendiculaires au plan vertical sont obtenus au moyen d'un vérin 7 articulé, par ses extrémités opposées et au moyen d'articulations sphériques, d'une part, dans la chape 5e et, d'autre part, dans une chape 4e équipant la portion intermédiaire de la poutre principale 4a.

Le vérin 6 et le parallélogramme déformable 4a-4b-5a-3a permettent un réglage de la position en hauteur des tambours de coupe 1 de la tête de coupe de la machine, tout en maintenant leurs axes dans une position verticale, tandis que le vérin 7 et le parallélogramme déformable 4a-4d-5f-3d permettent un réglage de la position desdits tambours de coupe par rapport à l'axe d'avancement de la machine, tout en maintenant les axes desdits tambours de coupe dans un plan perpendiculaire audit axe d'avancement.

On conçoit que le système de double parallélogramme déformable constituant le bras porteur 4 a pour fonction de maintenir le bon positionnement des ensembles ou tambours de coupe par rapport aux plans de travail de la machine.

Le bâti 2 portant les tambours de coupe 1 est suspendu au support 3 avec une latitude de pivotement de faible amplitude dans un plan vertical parallèle à l'axe d'avancement de la machine. Ledit bâti porteur 2 comporte, par exemple, un petit bras de suspension 2a solidaire d'une traverse 2b dudit bâti et fixé, au moyen d'un axe 8, dans une chape inférieure 3e du support 3. Un vérin 9 reliant le support 3 et le bâti porteur 2, permet de ramener les axes des tambours de coupe dans la position verticale, ce vérin étant, par exemple, articulé par ses extrémités opposées, d'une part, dans une chape 2c que présente le bras de suspension 2a à distance de son axe de suspension 8 et, d'autre part, dans une chape supérieure 3f du support 3. Le vérin 9 constitue une sécurité permettent de replacer les empilages d'outils de coupe des tambours de coupe 1 dans une position fonctionnelle verticale, dans le cas où ils s'inclineraient pour une cause fortuite, par exemple lors de la rencontre d'obstacles. Des moyens permettent l'ècartement volontaire des tambours de coupe 1, par exemple pour permettre le positionnement de la tête de coupe de la machine sur l'extrémité initiale d'un rang de vigne ou autres végétaux palissés à prètailler et/ou à tailler, et l'effacement automatique desdits tambours de coupe, lors de la rencontre d'un piquet du palissage. Les moyens permettant l'écartement volontaire des ensembles de coupe 1 comprennent un vérin 10 fixé, par ses extrémités opposées et au moyen d'articulations, d'une part, à la partie supérieure de l'un des montants 2e du bâti porteur 2 et, d'autre part, sur un coulisseau 11 monté sur une coulisse 12 comportant une extrémité déportée. Cette coulisse est elle-même articulée, par ses extrémités opposées et de façon dissymétrique, sur des bras 13a, 13b rigidement solidaires de la partie supérieure des montants 13c des berceaux de soutien pivotants 13 dans lesquels sont montés les tambours de coupe. Une butée 14 portée par la coulisse 12 limite l'amplitude de la course du coulisseau 11.

Le rappel automatique des tambours de coupe 1 vers le centre ou axe de travail de la machine est assuré par des ressorts de traction 15a-15b fixés, chacun, par l'une de ses extrémités, à l'un des bras 13a, 13b, respectivement, en avant des axes verticaux d'articulation 13f des berceaux de soutien 13, ces ressorts étant en outre reliés au moyen d'un tendeur à vis 16 permettant de régler leur force de rappel.

Ces ressorts autorisent aussi l'effacement automatique des tambours de coupe 1 lors de la rencontre des piquets du palissage, et leur rappel automatique en position fonctionnelle rapprochée d'interpénétration après contournement desdits piquets.

Les conformations de la coulisse 12 et des bras 13a, 13b assurent la simultanéité et le synchronisme de l'effacement et du rappel automatiques des tambours de coupe.

Les montants 13c des berceaux de soutien 13 des tambours de coupe 1 sont montés avec une aptitude de pivotement autour d'axes verticaux ou sensiblement verticaux 13f, sur les montants 2e du bâti-porteur 2, par exemple au moyen de charnières 17a, 17b. Les berceaux de soutien 13 comprennent encore une console supérieure 13d et une console inférieure 13e.

Sur la console supérieure, est installé le moteur hydraulique 18 assurant l'entraînement en rotation du tambour de coupe sous-jacent.

Chaque tambour de coupe est principalement et avantageusement constitué d'un arbre commun 19 et d'une pluralité d'outils de coupe superposés 20 empilés autour dudit arbre. Ce dernier est accouplé, au moyen d'articulations mobiles ou accouplements non rigides 21, 22, et de manière démontable, d'une part à l'arbre moteur 18a et, d'autre part, à la contre-lame rotative d'un outil porté par la console inférieure 13e et décrit ci-après.

Chaque outil de coupe 20 comprend: d'une part, une cage circulaire rotative 23 munie d'ouvertures périphériques 23a et, d'autre part, un organe 24 participant à l'action de coupe et logé à l'intérieur de ladite cage. Les ouvertures 23a sont, de préférence, faiblement espacées et régulièrement réparties sur toute la périphérie de la cage 23. Elles s'étendent vers l'intérieur de celle-ci et sont séparées par des dents 23d. Selon une caractéristique importante de l'invention, la cage circulaire rotative 23 et l'organe intérieur 24 de l'outil de coupe 20 ou de chaque outil de coupe de la machine sont agencés de manière complémentaire et associés pour constituer un système de lame et de contre-lame produisant une coupe par cisaillement. De manière avantageuse, la cage rotative 23 est agencée pour constituer une contre-lame circulaire, tandis que l'organe intérieur 24 comporte au moins une lame tranchante 24a.

La cage 23 comporte un manchon central 23b permettant son montage sur l'arbre 19 auquel elle est assemblée en rotation au moyen d'une clavette 25 logée dans une rainure longitudinale 19a dudit arbre et dans l'une des deux rainures de clavetage 23k diamétralement opposées dudit manchon central.

La cage 23 comprend une couronne médiane 23c comportant une surface plane 23c' appliquée contre une surface plane de l'organe intérieur 24 et assemblée rigidement au manchon central 23b.

Cette couronne est pourvue, périphériquement, d'échancrures ou découpures 23a' séparées par des dents 23d qui, selon l'exemple d'exécution avantageux illustré, sont agencées pour former autant de contre-lames.

Toutefois, suivant une variante d'exécution, le bord des dents 23d pourrait aussi être affuté pour constituer ainsi autant de lames tranchantes, l'élément intérieur 24 étant, dans ce cas, agencé pour former une contre-lame.

Les échancrures ou découpures 23a' et les dents 23d ont, respectivement, des profils symétriques et comportent des bords courbes. Les découpures 23a' présentent une entrée élargie suivie d'un resserrement et se terminent par un fond évasé.

Les dents 23d ont une forme sensiblement pétaloîde et comportent une extrèmité ètroite suivie d'un renflement et sont rattachées à la portion centrale de la couronne médiane 23c par une partie rétrécie.

La cage rotative 23 comporte des nervures de guidage rectilignes 23e, 23f disposées radialement sur chaque face des dents 23d et parallèlement à l'axe de celles-ci, les nervures inférieures 23f étant, sur une portion de leur longueur, espacées desdites dents, pour permettre le passage des lames tranchantes 24a.

Les nervures 23e, 23f ont des bords longitudinaux, respectivement 23e' et 23f', droits et avantageusement disposés perpendiculairement à l'axe de rotation de la cage 23. D'autre part, les extrémités 23e'' et 23f'' des nervures 23e, 23f, respectivement, sont également droites et disposées en alignement.

Chaque partie périphérique saillante de la cage rotative échancrèe 23, constituée par une dent 23d disposée entre deux nervures radiales 23e, 23f, se termine par un ergot 23g placé en avant de ladite dent et des extrémités droites 23e'' et 23f'' desdites nervures.

Grâce à la conformation des nervures 23e, 23f et à la prévision de l'ergot 23g, les fils F du palissage sautent aisément d'un espace entre-outil à un autre, avant qu'ils ne prennent une inclinaison critique les conduisant à s'engager dans une échancrure 23a-23a', ce qui écarte tout risque de sectionnement desdits fils par les outils de coupe, lorsqu'ils ne présentent pas un espacement et une tension idéaux, ce qui est pratiquement toujours le cas.

Les extrémités internes des nervures de guidage 23e, 23f, sont rigidement assemblées à des enveloppes cylindriques 23h, 23i, respectivement.

De manière avantageuse, l'organe intérieur 24 de l'outil de coupe selon l'invention comporte une pluralité de lames coupantes 24a (ou, alternativement, une pluralité de contre-lames) disposées sur un arc de cercle correspondant sensiblement à sa demi-périphérie avant, ledit organe pouvant, dans ce cas, être constitué de plusieurs secteurs fixés, par exemple par vissage, sur un porte-lames 26.

Ce dernier et, par conséquent, les lames 24a, sont montés avec une aptitude de mouvement angulaire d'amplitude limitée. Le porte-lames 26 comporte un alésage axial 26a par l'intermédiaire duquel il est monté autour du manchon 23b de la cage 23. Un coussinet 27 est interposé entre ledit manchon 23b et la paroi cylindrique de l'alésage 26a.

Le dispositif limitant l'amplitude du mouvement angulaire des lames est, par exemple, constitué par un levier 28 rigidement fixé sous le porte-lames 26 et débordant largement de la périphérie de la cage 23, ce levier venant en appui contre le montant 13c du berceau de soutien 13 et interdisant, de ce fait, la rotation complète de l'ensemble: porte-lames 26 et lames 24. Les outils de coupe 20 de chaque ensemble de coupe 1 ainsi exécutés sont empilés les uns sur les autres, avec interposition d'entretoises cylindriques d'écartement 29 centrées dans des entailles annulaires que présentent les extrémités du manchon central 23b des cages 23.

Les porte-lames 26 comportent une jupe annulaire 26b disposée coaxialement à leur alésage axial 26a et dont la base pénètre avec un faible jeu, dans l'enveloppe cylindrique 23h des cages sous-jacentes.

Le porte-lame 26 et sa jupe annulaire 26b sont avantageusement moulés en aluminium. Dans ce cas, des tiges en acier traité 23j sont implantées longitudinalement dans la portion circulaire de la jupe annulaire 26b orientée vers l'intérieur en considérant l'axe d'avancement de la machine. Ces tiges d'acier dur s'opposent au cisaillement progressif de la jupe 26b sous l'effet du frottement des fils des palissages. Les outils de coupe 20 de chaque ensemble de coupe 1 ont une position décalée, dans le plan vertical, par rapport aux outils de coupe de l'autre ensemble. De la sorte, lorsque lesdits ensembles ou tambours de coupe sont rapprochés, on obtient une interpénétration des bords des outils de coupe de chaque ensemble dans les espaces annulaires entre-outils de l'autre tambour de coupe (figure 7).

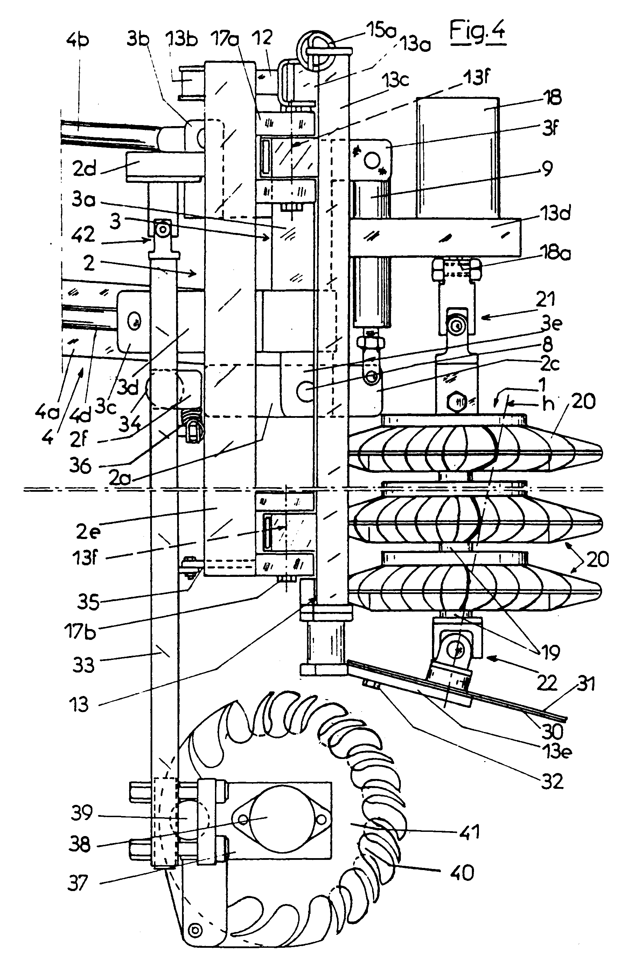

D'autre part, les échancrures périphériques 23a-23a' de la cage rotative 23 de chaque outil de coupe 20 ont une position décalée angulairement, par rapport aux échancrures de la cage rotative de l'outil de coupe sous-jacent et/ou superposé. Les échancrures 23a-23a' des outils empilés sont ainsi disposées suivant des hélices h (figure 4), de sorte que, quelle que soit leur section, les piquets du palissage ne peuvent être accrochés par lesdites échancrures dans lesquelles ils ne peuvent, en effet, pénètrer.

La vitesse tangentielle de rotation des cages tournantes des outils de coupe 20 est sensiblement égale à la vitesse linéaire d'avancement du tracteur T portant la machine, ce rapport ètant, par exemple, obtenu au moyen d'un variateur hydraulique connu en soi.

Le nombre des outils de coupe 20 empilés, c'est-à-dire la hauteur des tambours de coupe 1, peut être aisément adapté à la hauteur des bois à éliminer; il suffit, en effet, pour opérer un tel réglage, de désaccoupler l'extrémité supérieure de l'arbre 19 et d'ajouter ou d'enlever un ou plusieurs desdits outils de coupe.

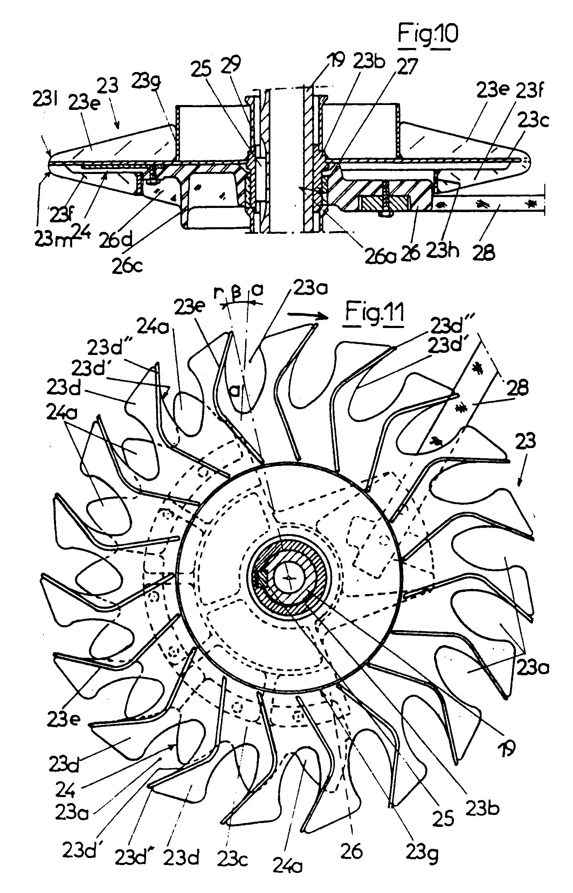

On a illustré, aux figures 10 à 12, une variante d'exécution des outils de coupe.

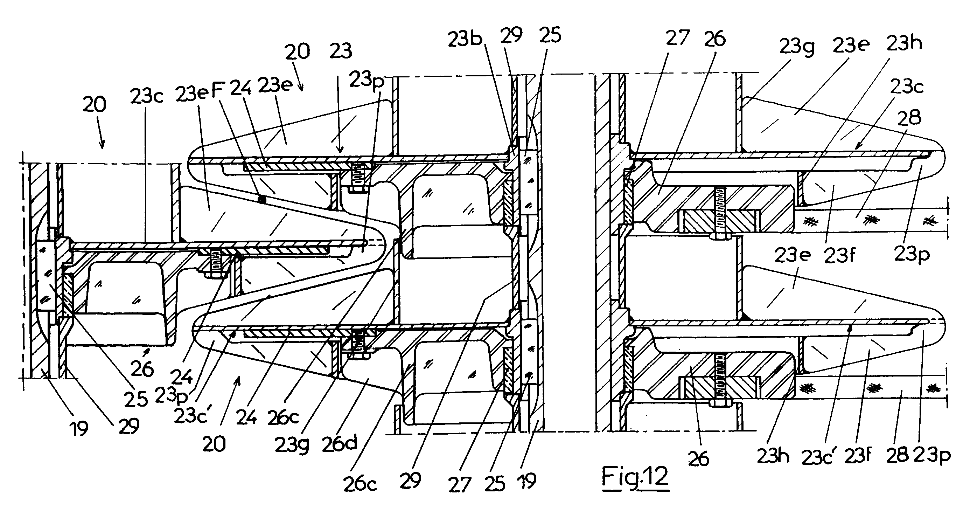

Suivant ce mode d'exécution, les échancrures 23a de la cage rotative ont un axe-a a incliné par rapport au rayon r de la cage rotative, de manière à former un angle β avec ledit rayon, en avant de ce dernier par rapport au sens de rotation de ladite cage indiqué par la flèche de la figure 11. La dent 23d disposée en arriére de chaque ouverture ou échancrure 23a, en considérant le sens de rotation de la cage, constitue une contre-lame. Toutefois, le bord avant 23d' des dents 23d pourrait aussi être affuté, pour constituer ainsi autant de lames tranchantes, l'élément intérieur fixe 24 étant, dans ce cas, agencé pour former une contre-lame.

Selon cette variante d'exécution, les nervures 23e, 23f ont une hauteur décroissante en direction de la périphérie de la couronne médiane 23c et forment un coude rentrant par rapport au rayon r et au sens de rotation de la cage 23. Les extrémités externes 23l, 23m des nervures 23e, 23f, respectivement, présentent une forme arrondie et s'étendent jusqu'à la pointe 23d'' des dents 23.

La cage 23 ainsi agencée a la forme générale d'un disque échancré dont la portion extérieure présente une épaisseur décroissante en direction de sa périphérie.

La console inférieure 13e des berceaux de soutien 13 est inclinée vers l'avant et, sur cette console, est monté, avec une inclinaison correspondante, un organe de coupe inférieur constitué d'un couteau fixe 30 et d'une contre-lame rotative 31 disposée coaxialement au-dessus dudit couteau. Ce dernier a une forme circulaire et il comporte une pluralité de lames coupantes 30a régulièrement réparties sur un arc de cercle correspondant sensiblement à sa demi-périphérie avant. Les lames coupantes 30a sont, de préférence, montées unitairement, de manière amovible, sur un porte-lames 30b et fixées, par exemple, par vissage, contre la face inférieure de celui-ci. Le couteau fixe ainsi réalisé est immobilisé en rotation par fixation sur la console 13e, par exemple au moyen d'une vis ou boulon 32. La contre-lame rotative a également une forme circulaire et elle est dotée d'échancrures périphériques 31a séparées par des dents 31b formant autant de contre-lames. Les dents 31b de la contre-lame sont également, de préférence, montées de manière amovible, sur un porte-dents 31c et fixées, par exemple par vissage, contre la face inférieure de celui-ci. La contre-lame tournante ainsi réalisée est entraînée en rotation au moyen de l'arbre 19 à l'extrémité inférieure duquel elle est accouplée au moyen de l'articulation mobile 22.

La machine selon l'invention comporte encore des organes de coupe latéraux. Chacun de ces organes est installé à l'extrémité inférieure d'un bras 33 suspendu, au moyen d'une articulation mobile ou accouplement non rigide 42, à une potence 2d rigidement solidaire de la partie supérieure des montants 2e du bâti-porteur 2.

Des vérins 34 fixés à un élément fixe 2f du bâti 2 et appuyés, par l'extrémité externe de leur tige, contre les bras suspendus 33, permettent de pivoter ces derniers en direction de l'extérieur par rapport à l'axe d'avancement de la machine et, par conséquent, d'écarter les organes de coupe latéraux portés par l'extrémité inférieure desdits bras. Ces vérins sont montés en parallèle avec le vérin 10 permettant l'écartement volontaire des tambours de coupe 1. Dans sa partie inférieure, chaque bras 33 est relié au montant 2e adjacent, au moyen d'une biellette 35 articulée, par ses extrémités opposées, sur ledit bras et sur ledit montant, respectivement.

Les biellettes 35 ont pour fonction d'imposer un mouvement circulaire aux bras 33 lorsque ces derniers sont écartés sous l'action des vérins 34, ou lorsqu'ils s'effacent automatiquement lors de la rencontre d'obstacles, ce qui a pour résultat intèressant de favoriser le dégagement des organes de coupe latéraux des enchevêtrements de bois dans lesquels ils peuvent se trouver.

Des ressorts de traction 36 fixés, par leurs extrémités opposées, d'une part, sur les bras suspendus 33 et, d'autre part, sur un élément fixe 2f du bâti 2, assurent le rappel automatique desdits bras et, par conséquent, des organes de coupe latéraux, en direction du centre de la machine.

Les organes de coupe latéraux sont portés par des platines 37 fixées à l'extrémité inférieure des bras 33 et sur le côté extérieur desquelles est installé le moteur hydraulique 38 destiné à l'entraînement en rotation de l'élément tournant desdits organes de coupe.

Les platines 37 sont montées sur les bras 33, au moyen d'une rotule 39 permettant le réglage de l'orientation des organes de coupe latéraux portés par lesdites platines.

Ces derniers sont constitués, de manière analogue aux organes de coupe inférieurs avant 30-31, d'un couteau fixe 40 et d'une contre-lame rotative circulaire 41 disposée contre la face interne dudit couteau. Celui-ci comporte une pluralité de lames coupantes amovibles régulièrement réparties seulement sur un arc de cercle correspondant sensiblement à sa demi-périphérie avant, tandis que la contre-lame rotative calée sur l'arbre de sortie du moteur 38, est pourvue d'échancrure régulièrement distribuées sur toute sa périphérie et séparées par des dents amovibles constituant une pluralité de contre-lames.

On souligne que l'absence de lames dans la partie arrière des couteaux fixes 30 et 40 des organes de coupe inférieurs et latéraux a pour avantage d'écarter tout risque de coupure des fils du palissage.

On souligne aussi que ces organes de coupe, en raison de leur agencement, permettent d'effectuer une coupe très nette des bois, comparable à celle que l'on obtient à l'aide des sécateurs, de sorte qu'elle peut être acceptée comme une opération de taille ne nécessitant aucune reprise manuelle ultérieure.

D'autre part, on observe que l'élément fixe 30. 40 des organes de coupe inférieurs et des organes de coupe latéraux sont disposés du côté du bois (porteur) qui reste rattaché au plant ou arbuste après la coupe, tandis que l'élément rotatif 31, 41 desdits organes est placé du côté du bois coupé. Grâce à cette disposition, les bois qui restent ne peuvent être cassés par lesdits organes de coupe.

## Revendications

1. Machine de coupe utilisable en agriculture, viticulture, et arboriculture, comportant au moins un outil de coupe (20) comprenant une cage circulaire (23) apte à tourner autour d'un axe de rotation et ayant, vue dans la direction de cet axe, la forme générale d'un disque échancré avec ses échancrures ou ouvertures périphériques (23a) s'étendant vers l'intérieur de celle-ci et séparées par des dents (23d), lesdites dents comportant sur leurs deux faces des nervures de guidage (23e, 23f) comprenant une partie extrême (23p) s'étendant approximativement selon la direction de l'axe de rotatión de la cage et des parties radiales s'étendant de cette partie extrême vers l'axe de rotation de manière à former ladite cage circulaire (23), et un organe intérieur (24) en forme de lame(s) participant à l'action de coupe logé dans ladite cage tournante (23) et s'étendant radialement en direction de la périphérie de cette dernière, lesdites dents et ledit organe intérieur coopérant pour couper les rameaux ou les sarments s'introduisant dans lesdites ouvertures, ladite cage tournante (23) étant accouplée à des moyens moteurs (18-18a-19) assurant son entraînement continu en rotation, la cage circulaire rotative (23) et l'organe intérieur (24) participant à l'action de coupe, étant agencés de manière complémentaire et associés pour constituer un système de lame et de contre-lame produisant une coupe par cisaillement.

2. Machine de coupe selon la revendication 1, caractérisée en ce qu'elle comporte au moins un ensemble de coupe (1) et, de préférence, deux ensembles de coupe (1) constitués, chacun, d'une pluralité d'outils de coupe (20) superposés.

3. Machine de coupe suivant la revendication 2, caractérisée en ce que les outils de coupe superposés (20) de l'ensemble de coupe ou de chaque ensemble de coupe (1) sont empilés autour d'un axe commun (19).

4. Machine de coupe selon l'une quelconque des revendications 1 à 3, caractérisée en ce que l'organe intérieur (24) participant à l'action de coupe, est monté fixement dans la cage rotative (23).

5. Machine de coupe selon l'une quelconque des revendications 1 à 4, caractérisée en ce que la cage entrainée en rotation (23) est agencée pour constituer une contre-lame circulaire, tandis que l'organe intérieur (24) comprend au moins une lame tranchante (24a).

6. Machine de coupe selon l'une quelconque des revendications 1 à 5, caractérisée en ce que la cage circulaire rotative (23) du ou des outils de coupe (20) est entraînée en rotation à une vitesse circonférentielle égale ou voisine de la vitesse linéaire d'avancement de ladite machine.

7. Machine de coupe suivant la revendication 3, caractérisée en ce que la cage rotative (23) de chaque outil de coupe (20) comporte un manchon central (23d) au moyen duquel ladite cage est montée autour de son arbre d'entraînement (19) et calée sur celui-ci.

8. Machine de coupe selon la revendication 7, caractérisée en ce que des moyens d'écartement (29) sont disposés entre les outils de coupe (20) empilés.

9. Machine de coupe selon l'une quelconque des revendications 1 à 7, caractérisée en ce que la cage circulaire rotative (23) comprend une couronne médiane (23c) comportant une surface plane (23c') appliquée contre une surface plane de l'organe intérieur (24) et dotée de découpures ou èchancrures (23a') séparées par des dents (23d) constituant: soit autant de contrelames coopérant avec la ou les lames tranchantes (24a) de l'organe intérieur; soit autant de lames tranchantes coopérant avec la ou les contre-lames dudit organe intérieur.

10. Machine de coupe selon la revendication 9, caractérisée en ce que les découpures ou échancrures (23a') et les dents (23d) comportent des bords courbes, les échancrures (23a') présentant une entrée élargie suivie d'un resserrement et se terminant par un fond évasé, tandis que les dents (23d) ont une forme sensiblement pétaloïde et comprennent une extrémité étroite suivie d'un renflement et sont rattachées à la portion centrale de la couronne médiane (23c) par une partie rétrécie.

11. Machine de coupe suivant l'une des revendications 9 ou 10, caractérisée en ce que des nervures de guidages (23e, 23f) sont disposées radialement sur chaque face de la couronne médiane (23c) et des dents (23d), et en ce que chaque partie périphérique saillante (23d-23e-23f) de la cage rotative échancrée (23) se termine par un ergot (23g) placé en avant de la dent (23d) de ladite partie saillante.

12. Machine de coupe selon la revendication 10, caractérisée en ce que les nervures (23e, 23f) ont des bords longitudinaux (23e', 23f') droits et/ou des extrémités (23e'', 23f'') droites.

13. Machine de coupe suivant la revendication 9, caractérisée en ce que les ouvertures périphériques (23a) de la cage circulaire rotative (23) sont constituées par des échancrures dont l'axe (a-a) est incliné par rapport au rayon (r) de ladite cage, de manière à former un angle (β) avec ledit rayon, en avant de ce dernier par rapport au sens de rotation de ladite cage.

14. Machine de coupe suivant la revendication, caractérisée en ce que des nervures de guidages (23e, 23f) sont disposées sur chaque face de la couronne médiane (23c) et des dents (23d), ces nervures ayant une hauteur décroissante en direction de la périphérie de ladite couronne et se terminant par une extrémité externe arrondie (23l, 23m).

15. Machine de coupe selon l'une quelconque des revendications 1 à 14, caractérisée en ce que l'organe intérieur (24) est monté avec une aptitude de mouvement angulaire d'amplitude limitée.

16. Machine de coupe suivant l'une quelconque des revendications 1 à 15, caractérisée en ce que l'organe intérieur (24) comprend une pluralité de lames tranchantes (24a) ou une pluralité de contre-lames disposées sur un arc de cercle.

17. Machine de coupe selon l'une quelconque des revendications 2 à 16, caractérisée en ce que les ouvertures ou échancrures périphériques (23a) de la cage rotative (23) de chaque outil de coupe (20) des ensembles de coupe (1) ont une position décalée angulairement par rapport aux ouvertures ou échancrures de la cage rotative de l'outil de coupe sous-jacent et/ou superposé.

18. Machine de coupe suivant l'une quelconque des revendications 2 à 17, comportant au moins deux ensembles de coupe (1), caractérisée en ce que les outils de coupe (20) de chacun desdits ensembles de coupe ont une position décalée, dans le plan vertical, par rapport aux outils de coupe de l'autre ensemble, et en ce que lesdits ensembles de coupe (1) peuvent occuper, en cours de travail, une position rapprochée suivant laquelle il y a interpénétration des bords des outils de coupe superposés (20) de chacun desdits ensembles de coupe dans les espaces ménagés entre les bords des outils de coupe superposés de l'autre ensemble de coupe.

19. Machine de coupe selon l'une quelconque des revendications 3 à 18, caractérisée en ce que l'ensemble de coupe ou chaque ensemble de coupe (1) comporte un outil de coupe inférieur (30-31) incliné vers l'avant et dispose au-dessous du tambour de coupe constitué par les outils de coupe empilés, l'arbre (19) dudit tambour de coupe étant accouplé, au moyen d'une articulation mobile ou accouplement non rigide (21, 22), d'une part, à l'arbre moteur (18a) et, d'autre part, à l'organe rotatif (31) dudit outil de coupe inférieur.

20. Machine de coupe selon l'une quelconque des revendications 3 à 19, caractérisée en ce que le tambour de coupe (1) ou chaque tambour de coupe (1) est porté par un berceau de soutien (13), et en ce que ladite machine comporte, d'une part, des moyens (13f) permettant l'effacement automatique dudit ou desdits tambours de coupe, lors de la rencontre des piquets du palissage, et, d'autre part, des moyens (15a, 15b, 16) assurant le rappel automatique desdits tambours de coupe en direction de son axe de travail, après contournement desdits piquets.

21. Machine de coupe selon l'une quelconque des revendications 3 à 20, caractérisée en ce que sa tête de coupe (1) est montée à l'extrémité d'un bras porteur (4) mobile constitué par un système de double parallélogramme déformable (4a-4b-5a-3b, 4a-4d-5f-3d) assurant le déplacement dudit bras porteur dans le plan vertical et dans des plans perpendiculaires au plan vertical.

22. Machine de coupe suivant l'une quelconque des revendications 20 ou 21, caractérisée en ce que les berceaux de soutien (13) des ensembles de coupe (1) sont suspendus, avec une latitude de pivotement de faible amplitude, dans un plan parallèle à l'axe d'avancement de ladite machine.

23. Machine de coupe selon l'une quelconque des revendications 1 à 22, caractérisée en ce qu'elle comprend des outils de coupe latéraux (40-41) installés, chacun, à l'extrémité inférieure d'un bras (33) suspendu, au moyen d'une articulation mobile ou accouplement non rigide (42) et relié, de manière articulée, au moyen d'une biellette (35), à un montant (2e) du bâti (2) de ladite machine; ladite machine comportant encore des moyens (34) permettant l'écartement desdits bras suspendus et desdits outils latéraux, et des moyens (36) assurant leur rappel automatique en direction de son centre ou axe de travail.

24. Machine de coupe suivant la revendication 23, caractérisée en ce que chaque outil de coupe latéral (40-41) est installé à l'extrémité inférieure de son bras porteur (33), au moyen d'une rotule (39) permettant un réglage de son orientation.

25. Machine de coupe selon l'une quelconque des revendications 19, 23 ou 24, caractérisée en ce que les outils de coupe inférieurs (30-31) et les outils de coupe latéraux (40-41) comprennent: d'une part, un élément circulaire rotatif (31, 41) pourvu d'échancrures (31a) et de dents (31b) périphériques et constitué, de préférence, par une contre-lame, et, d'autre part, un élément fixe (30, 40) comportant une pluralité de dents (30a) réparties sur un arc de cercle correspondant sensiblement à sa demi-périphérie avant, cet élément fixe étant, de préférence, constitué par un couteau dont les dents (30a) constituent autant de lames tranchantes; ledit élément fixe ne comportant aucune dent ou lame dans sa portion arrière et étant disposé du côté du bois qui demeure rattaché au plant ou arbuste après la coupe, tandis que ledit élément rotatif est placé du côté du bois coupé.

## Claims

1. Cutting machine for use in agriculture, viticulture and arboriculture, having at least one cutting tool (20) comprising a circular cage (23) adapted to rotate about a rotational axis and having, viewed in the direction of said axis, the general form of a scalloped disc with its peripheral scallops or openings (23a) extending towards the interior thereof and separated by teeth (23d), said teeth having guide ribs (23e, 23f) on their two faces comprising an extreme portion (23p) extending substantially in the direction of the rotational axis of the cage and radial portion extending from said extreme portion towards the rotational axis so as to form said circular cage (23), and an internal member (24), in the form of one or more blades contributing to the cutting action, housed in said rotating cage (23) and extending radially in the direction of the periphery thereof, said teeth and said internal member cooperating to cut the branches or shoots entering said openings, said rotating cage (23) is coupled to motor means (18-18a-19) which ensure that it is continuously driven in rotation, the rotary circular cage (23) and the internal member (24) contributing to the cutting action are arranged in a complementary manner and associated so as to constitute a blade and counter-blade system producing a shearing cutting action.

2. Cutting machine according to claim 1, characterised in that it has at least one cutting assembly (1) and, preferably, two cutting assemblies (1), each constituted by a plurality of superposed cutting tools (20).

3. Cutting machine according to claim 2, characterised in that the superposed cutting tools (20) of the cutting assembly or of each cutting assembly (1) are stacked around a common axle (19).

4. Cutting machine according to any one of claims 1 to 3, characterised in that the internal member (24) contributing to the cutting action is fixedly mounted in the rotary cage (23).

5. Cutting machine according to any one of claims 1 to 4, characterised in that the cage driven in rotation (23) is arranged so as to constitute a circular counter-blade, whereas the internal member (24) incorporates at least one sharp-edged blade (24a).

6. Cutting machine according to any one of claims 1 to 5, characterised in that the rotary circular cage (23) of the cutting tool or tools (20) is driven in rotation at a circumferential speed equal to or near the linear speed of advance of said machine.

7. Cutting machine according to claim 3, characterised in that the rotary cage (23) of each cutting tool (20) has a central sleeve (23d) by means of which said cage is mounted about its driving shaft (19) and locked thereon.

8. Cutting machine according to claim 7 , characterised in that spacing means (29) are disposed between the stacked cutting tools (20).

9. Cutting machine according to any one of claims 1 to 7, characterised in that the rotary circular cage (23) comprises a median ring (23c) having a plane surface (23c') applied against a plane surface of the internal member (24) and equipped with openings or scallops (23a') separated by teeth (23d) constituting: either as many counter-blades cooperating with the sharp-edged blade or blades (24a) of the internal member, or as many sharp-edged blades cooperating with the counter-blade(s) of said internal member.

10. Cutting machine according to claim 9, characterised in that the openings or scallops (23a') and the teeth (23d) have curved edges, the scallops (23a') presenting an enlarged mouth followed by a constriction and terminating in a flared bottom, whereas the teeth (23d) are substantially petaloid in shape and comprise a narrow extremity followed by a bulge and are fastened to the central portion of the median ring (23c) by a constricted part.

11. Cutting machine according to one of claims 9 or 10, characterised in that guide ribs (23e, 23f) are disposed radially on each face of the median ring (23c) and of the teeth (23d), and in that each protruding peripheral part (23d-23e-23f) of the scalloped rotary cage (23) terminates in a toe (23g) positioned in front of the tooth (23d) of said protruding part.

12. Cutting machine according to claim 11, characterised in that the ribs (23e, 23f) have straight longitudinal edges (23e', 23f') and/or straight ends (23e'', 23f'').

13. Cutting machine according to claim 9, characterised in that the peripheral openings (23a) of the rotary circular cage (23) are constituted by scallops whose axis (a-a) is inclined with respect to the radius (r) of said cage, thereby forming an angle (β) with said radius, forward of the latter with respect to the direction of rotation of said cage.

14. Cutting machine according to claim 13, characterised in that guide ribs (23e, 23f) are disposed on each face of the median ring (23c) and of the teeth (23d), said ribs decreasing in height in the direction of the periphery of said ring and terminating in a rounded external extremity (23l, 23m).

15. Cutting machine according to any one of claims 1 to 14, characterised in that the internal member (24) is mounted with an aptitude for angular movement over a limited range.

16. Cutting machine according to any one of claims 1 to 15, characterised in that the internal member (24) comprises a plurality of sharp-edged blades (24a) or a plurality of counter-blades disposed over an arc of a circle.

17. Cutting machine according to any one of claims 2 to 16, characterised in that the peripheral openings or scallops (23a) of the rotary cage (23) of each cutting tool (20) of the cutting assemblies (1) have an angularly offset position with respect to the openings or scallops of the rotary cage of the subjacent and/or superposed cutting tool.

18. Cutting machine according to any one of claims 2 to 17, having at least two cutting assemblies (1), characterised in that the cutting tools (20) of each of said cutting assemblies have an offset position, in the vertical plane, with respect to the cutting tools of the other assembly, and in that said cutting assemblies (1) are able to occupy, in the course of operation, a position close together in which there is interpenetration of the edges of the superposed cutting tools (20) of each of said cutting assemblies in the spaces incorporated between the edges of the superposed cutting tools of the other cutting assembly.

19. Cutting machine according to any one of claims 3 to 18, characterised in that the cutting assembly or each cutting assembly (1) has a lower cutting tool (30-31) which is forwardly inclined and disposed beneath the cutting drum constituted by the stacked cutting tools, the shaft (19) of said cutting drum being coupled, by means of a movable joint or non-rigid coupling (21, 22), on the one hand to the motor shaft (18a), and on the other hand to the rotary member (31) of said lower cutting tool.

20. Cutting machine according to anyone of claims 3 to 19, characterised in that the cutting drum (1) or each cutting drum (1) is carried by a supporting cradle (13), and in that said machine includes, on the one hand, means (13f) allowing automatic cancellation of said cutting drum or drums upon encountering the stakes of the line of stakes and, on the other hand, means (15a, 15b, 16) ensuring the automatic return of said cutting drums in the direction of its working axis once said stakes have been bypassed.

21. Cutting machine according to any one of claims 3 to 20, characterised in that its cutting head (1) is mounted on the end of a mobile carrying arm (4) constituted by a deformable double parallelogram system (4a-4b-5a-3b, 4a-4d-5f-3d) which ensures the displacement of said carrying arm in the vertical plane and in planes perpendicular to the vertical plane.

22. Cutting machine according to ether one of claims 20 or 21, characterised in that the supporting cradles (13) of the cutting assemblies (1) are suspended, with a small swivelling latitude, in a plane parallel to the axis in which said machine is advanced.

23. Cutting machine according to any one of claims 1 to 22, characterised in that it comprises lateral cutting tools (40-41) each installed on the lower end of an arm (33) suspended by means of a mobile joint or non-rigid coupling (42) and connected in articulated manner by means of a rocker bar (35) to a strut (2e) of the frame (2) of said machine; said machine further having means (34) enabling said suspended arms and said lateral tools to be spaced apart, and means (36) ensuring their automatic return in the direction of its operating centre or axis.

24. Cutting machine according to claim 23 , characterised in that each lateral cutting tool (40-41) is installed on the lower end of its carrying arm (33), by means of a ball (39) allowing its orientation to be regulated.

25. Cutting machine according to any one of claims 19, 23 or 24 characterised in that the lower cutting tools (30-31) and the lateral cutting tools (40-41) comprise: on the one hand, a rotary circular element (31, 41) provided with scallops (31a) and peripheral teeth (31b) and preferably constituted by a counter-blade, and, on the other hand, a fixed element (30, 40) having a plurality of teeth (30a) distributed over an arc of a circle corresponding substantially to its front half-periphery, said fixed element preferably being constituted by a cutting knife whose teeth (30a) constitute as many sharp-edged blades; said fixed element having no tooth or blade in its rear portion and being disposed on the side of the wood that remains attached to the plant or bush after cutting, whereas said rotary element is positioned on the side of the cut wood.

## Patentansprüche

1. Schneidapparat zur Verwendung in der Landwirtschaft, dem Weinbau und der Baumgärtnerei, mit mindestens einem Schneidwerkzeug (20), das ein kreisförmiges, um eine Achse drehbares Gehäuse (23) aufweist, das in Richtung dieser Achse gesehen allgemein die Form einer geschweiften (gebogenen), mit Aussparungen versehenen Scheibe aufweist, deren Umfangsaussparungen oder -Öffnungen (23a) sich zum Inneren hin erstrecken und durch Zähne (23d) getrennt sind, die auf ihren beiden Flächen Führungsrippen (23a,23f) aufweisen und die einen sich annähernd in Richtung der Rotationachse des Gehäuses erstreckenden Außenteil (23p) und Radial-Teile aufweisen, die sich von dem Außenteil (23p) derart zur Rotationsachse hin erstrecken, daß das kreisförmige Gehäuse gebildet wird und mit einem inneren Organ (24) in Form einer oder mehrerer Klingen, das an dem Schneidevorgang teilnimmt und in dem rotierenden Gehäuse (23) aufgenommen ist und sich radial zum Außenumfang hin erstreckt, wobei die Zähne und das innere Organ zusammenwirken um Äste oder Reben, die durch die Öffnung hindurchragen, abzuschneiden, wobei das kreisförmige rotierende Gehäuse (23), das mit Motormitteln (18a-19) gekoppelt ist , die seine kontinuierliche Drehung sicherstellen, und das innere Organ (24) das an der Schneideaktion teilnimmt, komplementär zueinander angeordnet und einander zugeordnet sind, um ein System aus Klinge und Gegenklinge zu bilden, das einen Schnitt durch Abscheren hervorruft.

2. Schneidapparat nach Anspruch 1, dadurch **gekennzeichnet,** daß zumindest ein Schneidsatz (1), vorzugsweise zwei Schneidsätze (1) vorgesehen ist, bzw. sind, von denen jedes von einer Vielzahl von übereinander angeordneten Schneidwerkzeugen (20) gebildet ist.

3. Schneidapparat nach Anspruch 2, dadurch **gekennzeichnet,** daß die übereinander angeordneten Schneidwerkzeuge (20) des einen Schneidsatzes oder jedes Schneidsatzes (1) auf einer gemeinsamen Achse (19) aufgeschichtet sind.

4. Schneidapparat nach einem der Ansprüche 1 bis 3, dadurch **gekennzeichnet,** daß das innere Organ (24), das an der Schneideaktion teilnimmt, fest in dem drehbaren Gehäuse (23) angeordnet ist.

5. Schneidapparat nach einem der Ansprüche 1 bis 4, dadurch **gekennzeichnet,** daß das rotierend angetriebene Gehäuse (23) angeordnet ist, eine kreisförmige Gegenklinge zu bilden, während das innere Organ (24) zumindest eine Schneidklinge (24) aufweist.

6. Schneidapparat nach einem der Ansprüche 1 bis 5, dadurch **gekennzeichnet,** daß das kreisförmige drehbare Gehäuse oder das Schneidwerkzeug (20) mit einer Umfangsgeschwindigkeit angetrieben ist, die gleich ist oder im Bereich der Geschwindigkeit der geradlinigen Vorwärtsbewegung der Maschine.

7. Schneidapparat nach Anspruch 3, dadurch **gekennzeichnet,** daß das drehbare Gehäuse (23)jedes Schneidwerkzeugs (20) eine zentrale Muffe (23b) aufweist, mittels der das Gehäuse auf der Antriebswelle (19) angeordnet und auf ihr festgelegt ist.

8. Schneidapparat nach Anspruch 7, dadurch **gekennzeichnet,** daß Abstandsmittel (29)zwischen den aufgeschichteten Schneidwerkzeugen (20) angeordnet sind.

9. Schneidapparat nach einem der Ansprüche 1 bis 7, dadurch **gekennzeichnet,** daß das kreisförmige drehbare Gehäuse (23) einen mittigen Kranz mit einer ebenen Oberfläche (23') aufweist, die gegen eine ebene Fläche des inneren Organs (24) anliegt und mit Ausschnitten oder Ausnehmungen (23a') versehen ist, welche durch dieZähne (23d) voneinander getrennt sind und entweder Gegenklingen, die mit den Schneidklingen (24a) des inneren Organs zusammenwirken oder Schneidklingen bilden, die mit der oder den Gegenklingen des genannten inneren Organs zusammenwirken.

10. Schneidapparat nach Anspruch 9, dadurch **gekennzeichnet,** daß die Ausschnitte oder Ausnehmungen (23a') und die Zähne (23d) gekrümmte Ränder aufweisen, wobei die Ausnehmungen (23a') einen vergrößerten Eingang besitzen, gefolgt von einer Verengung und in einem erweiterten Bodenbereich enden, während die Zähne (23d) eine im wesentlichen petaloide Form besitzen und ein schmales Ende aufweisen, gefolgt von einer Verdickung und an dem Mittenabschnitt des Mittelkranzes (23c) mittels eines verengten Abschnitts verbunden sind.

11. Schneidapparat nach einem der Ansprüche 9 oder 10, dadurch **gekennzeichnet,** daß Führungsrippen (23e, 23f) auf jeder Fläche des Mittenkranzes (23) und den Zähnen (23d) angeordnet sind und daß jeder vorstehende Umfangsabschnitt (23d-23e-23f) des geschweiften drehbaren Gehäuses (23) mit einem Vorsprung (23g) endet, der vor dem Zahn (23d) des genannten vorspringenden Abschnitts plaziert ist.

12. Schneidapparat nach Anspruch 11, dadurch **gekennzeichnet,** daß die Rippen (23e,23f) geradlinige Längsränder (23e', 23f') und/oder geradlinige Enden (23e'', 23f'') aufweisen.

13. Schneidapparat nach Anspruch 9, dadurch **gekennzeichnet,** daß die Umfangsöffnungen (23a) des drehbaren, kreisförmigen Gehäuses (23) von Ausnehmungen gebildet sind, deren Achse (a-a) bezüglich des Radiuses des Gehäuses geneigt ist und mit dem genannten Radienstrahl einen Winkel ( ) bildet, der in Bezug auf die Drehrichtung des Gehäuses vor dem Radienstrahl liegt.

14. Schneidapparat nach Anspruch 13, dadurch **gekennzeichnet,** daß die Führungsrippen (23e, 23f) auf jeder Fläche des Mittenkranzes (23c) und der Zähne (23d) angeordnet sind und eine Höhe aufweisen, die Richtung auf den Umfang des Kranzes abnimmt und mit einer äußeren abgerundeten Ende (23l, 23m) enden.

15. Schneidapparat nach einem der Ansprüche 1 bis 14, dadurch **gekennzeichnet,** daß das innere Organ (24) mit einer Fähigkeit einer Winkelbewegung begrenzten Ausmaßes montiert ist.

16. Schneidapparat nach einem der Ansprüche 1 bis 15, dadurch **gekennzeichnet,** daß das innere Organ (24) eine Vielzahl von Schneidklingen (24) oder eine Vielzahl von Gegenklingen aufweist, die auf einem Kreisbogen angeordnet sind.

17. Schneidapparat nach einem der Ansprüche 2 bis 16, dadurch **gekennzeichnet,** daß die Öffnungen oder Umfangsausnehmungen (23a) des drehbaren Gehäuses (3) jedes Schneidwerkzeugs (20) der Schneidsätze (1) eine winkelversetzte Position bezüglich der Öffnungen oder Ausnehmungen des drehbaren Gehäuses des nach unten benachbarten und/oder darüber angeordneten Schneidwerkzeugs einnimmt.

18. Schneidapparat nach einem der Ansprüche 2 bis 17, mit zumindest zwei Schneidsätzen (1), dadurch **gekennzeichnet,** daß die Schneidwerkzeuge (20) jedes der Schneidsätze in der senkrechten Ebene bezüglich der Schneidwerkzeuge des anderen Schneidsatzes eine versetzte Position aufweisen und daß die genannten Schneidsätze (1) während des Betriebs eine angenäherte Position einnehmen können, in der es ein gegenseitiges Eindringen der Ränder der übereinander angeordneten Schneidwerkzeuge (29) jedes Schneidsatzes in den Zwischenraum zwischen den Rändern der übereinander angeordneten Schneidwerkzeuge des anderen Schneidsatzes gibt.

19. Schneidapparat nach einem der Ansprüche 3 bis 18, dadurch **gekennzeichnet,** daß der Schneidsatz oder jeder Schneidsatz 81) ein unteres Schneidwerkzeug (30-31) aufweist, das nach vorne geneigt ist und unter der Schneidtrommel angeordnet ist, die von den aufgeschichteten Schneidwerkzeugen gebildet ist, wobei die Welle (19) der Schneidtrommel mittels eines bewegbaren Gelenks oder einer nicht steifen Kupplung (21,22) einerseits mit der Motorwelle (18a) und andererseits dem drehbaren Organ (31) des unteren Schneidwerkzeugs verbunden ist.

20. Schneidapparat nach einem der Ansprüche 3 bis 19, dadurch **gekennzeichnet**, daß die Schneidtrommel (1) oder jede Schneidtrommel (1) von einem Stützträger gehalten ist, und daß die Maschine zum einen Mittel (13f) aufweist, welche das automatische Rückstellen des oder der Schneidtrommeln gestattet, wenn diese auf einen Spalierpfosten trifft und zum anderen Mittel (15a, 15b, 16) welche die automatische Rückstellung der Schneidtrommeln in Richtung seiner Arbeitsachse nach dem Umgehen der Pfosten sicherstellen.

21. Schneidapparat nach einem der Ansprüche 3 bis 20, dadurch **gekennzeichnet,** daß sein Schneidkopf (1) am Ende eines beweglichen Trägerarms (4) angeordnet ist, der von einem System verformbarer Doppelparallelogramme (4a-4b-5a3b, 4a-4d-5f-3d) gebildet wird und die Verschiebung des Trägerarms in der senkrechten Ebene und in Ebenen normal zur senkrechten Ebene sicherstellt.

22. Schneidapparat nach einem der Ansprüche 20 oder 21, dadurch **gekennzeichnet,** daß der Stützträger (13) der Schneidsätze mit einem Spielraum zum Schwenken mit geringer Amplitude in einer Ebene parallel Zur Fortbewegungsachse der Maschine aufgehängt sind.

23. Schneidapparat nach einem der Ansprüche 1 bis 22, dadurch **gekennzeichnet,** daß seitliche Schneidwerkzeuge (40-41) vorgesehen sind, die jeweils vom inneren Ende eines Armes installiert sind, der mittels eines bewegbaren Gelenks oder einer nicht steifen Kupplung (42) aufgehängt und schwenkbar mittels eines Schwingarms (35) an einem Ständer (2e) am Rahmen der Maschine befestigt ist, wobei die Maschine des weiteren Mittel (34) besitzt, die das Abspreizen des aufgehängten Arms und der seitlichen Werkzeuge erlaubt und daß Mittel (36) vorgesehen sind, die die automatische Rückstellung in Richtung zur Mitte oder zur Arbeitsachse sicherstellen.

24. Schneidapparat nach Anspruch 23, dadurch **gekennzeichnet,** daß jedes seitliche Schneidwerkzeug (40-41) am unteren Ende seines Trägerarms (33) mittels eines Gelenks befestigt ist, das eine Steuerung seiner Richtung ermöglicht.

25. Schneidapparat nach einem beliebigen der Ansprüche 19,23, oder 24, dadurch **gekennzeichnet**, daß die unteren Schneidwerkzeuge (30-31) und die seitlichen Schneidwerkzeuge (40-41) folgende Merkmale aufweisen: Zum einen ein kreisförmiges drehbares Element (31,41), versehen am Umfang mit Ausnehmungen (31a) aund Zähnen (31b) und vorzugsweise von einer Gegenklinge gebildet, und zum anderen ein festes Element (30,40) das eine Vielzahl von Zähnen (30a) aufweist, die über einen Kreisbogen verteilt sind, der im wesentlichen seinem vorderen halben Umfang entspricht, wobei das feste Element vorzugweise gebildet wird von einem Messer, dessen Zähne (30a) genausoviel Schneidklingen bilden und wobei das feste Element in seinem rückwärtigen Abschnitt keine Zähne oder Klingen aufweist und seitlich des Holzes angeordnet wird, das an der Pflanze oder dem Rebstock nach dem Schnitt verbleibt, während das drehbare Element an der Seite des geschnittenen Holzes plaziert wird.
